# EUROPÄISCHE PATENTSCHRIFT

(11) **EP 2 093 941 B1**
(45) Veröffentlichungstag und Bekanntmachung des Hinweises auf die Patenterteilung: **25.08.2010**
(21) Anmeldenummer: 08003219.6
(22) Anmeldetag: 22.02.2008
(51) Int. Cl.: H04L 12/40

(54) **Feldbussystem**
Field bus system
Système de bus de terrain

(43) Veröffentlichungstag der Anmeldung: 26.08.2009
(73) Patentinhaber: FESTO AG & Co. KG, 73734 Esslingen (DE)
(72) Erfinder: Ziegele, Achim, 73066 Uhingen (DE); Schneider, Danny, 73734 Esslingen (DE); Kremser, Rolf, 73033 Göppingen (DE)
(74) Vertreter: Vetter, Hans

(56) Entgegenhaltungen:
- EP-A- 1 657 608
- EP-A- 1 748 338
- WO-A-2004/071025
- US-A1- 2005 078 700

## Beschreibung

Die Erfindung betrifft ein Feldbussystem mit einem Mastermodul und wenigstens zwei Untermodulen, wobei die Untermodule seriell miteinander verbunden sind, ein erstes Untermodul und ein letztes Untermodul jeweils nur mit einem weiteren Untermodul verbunden sind, das Mastermodul nur mit dem ersten Untermodul verbunden ist und das Mastermodul und die Untermodule dazu vorgesehen sind, dass das Mastermodul Datenpakete an das erste Untermodul sendet und von ihm empfängt, welche zwischen den Untermodulen weitergegeben werden.

Die DE 10 2006 013 872 A1 beschreibt ein Feldbussystem mit einem Mastermodul in Form einer Datenverarbeitungseinheit und mindestens drei Untermodulen. Die Untermodule sind seriell miteinander verbunden und bilden so eine Untermodulkette. Das Mastermodul ist nur mit einem ersten Untermodul der Untermodulkette verbunden. Es sendet Datenpakete an das erste Untermodul und empfängt Datenpakte vom ersten Untermodul. Die Datenpakte werden zwischen den Untermodulen weitergegeben. Das Mastermodul und das erste Untermodul sowie die Untermodule untereinander sind mit zwei Datenleitungspaaren verbunden, so dass das Mastermodul und die Untermodule gleichzeitig Datenpakete senden und empfangen können. Die Datenübertragung erfolgt damit im so genannten Voll-Duplex-Verfahren. Demgegenüber ist es die Aufgabe der Erfindung, ein Feldbussystem und ein Verfahren zum Datenaustausch in einem Feldbussystem vorzuschlagen, bei welchen der Verkabelungsaufwand und damit die Kosten für die Verkabelung möglichst gering sind. Erfindungsgemäß wird die Aufgabe durch ein Feldbussystem mit den Merkmalen des Anspruchs 1 und ein Verfahren mit den Merkmalen des Anspruchs 9 gelöst.

Die EP 1 748 338 A1 offenbart ein Verfahren zur Optimierung der Brandbreitenausnutzung bei Bussystemen, bei dem ein Datentelegramm, das in einem übergeordneten Datennetz, welches auf dem Internetprotokoll basiert, verwendbar ist. Um eine effektive Brandbreitenausnutzung bei der Datenübertragung in Bussystemen, die auf einem Internetprotokoll basieren, zu erreichen, wird mindestens ein Datentelegramm, mindestens ein Datensegment und/oder mindestens ein Datenabschnitt durch mindestens einen Teilnehmer generiert und/oder verändert und/oder gelöscht.

Die US 2005/0078700 A1 offenbart eine besonders kostengünstige Ethernet-Busarchitektur, bei der eine Kommunikation zwischen einer zentralen Ethernet-Einheit und einem Ethernet-Endgerät mittels eines einzigen Signalleitungspaars verwirklicht wird.

Erfindungsgemäß sind das Mastermodul und die Untermodule für das Senden und Empfangen der Datenpakete jeweils mit einem Signalleitungspaar verbunden. Das letzte Untermodul, welches das Ende der Untermodulkette bildet, weist einen Speicher auf und ist dazu vorgesehen, ein vom Mastermodul gesendetes Datenpaket zu empfangen, vollständig im Speicher zwischenzuspeichern und anschließend über die anderen Untermodule an das Mastermodul zurückzusenden. Die Datenübertragung erfolgt in beiden Richtungen mittels desselben Signalleitungspaars und damit im so genannten Halb-Duplex-Verfahren. Damit ist für die Datenübertragung nur ein Signalleitungspaar notwendig. Das letzte Untermodul schaltet also nach Erhalt des vollständigen Datenpakets die Datenrichtung in dem Signalleitungspaar um. Dasselbe geschieht dann wieder, wenn das Datenpaket wieder im Mastermodul angekommen ist. Das Datenpaket kann insbesondere auf dem Hin- und/oder Rückweg durch die Untermodule verändert werden. So können Messdaten oder auch Prozessdaten, wie beispielsweise Statusinformationen der Untermodule, von den Untermodulen an das Mastermodul gesendet werden.

Damit kann im Vergleich zum Feldbussystem gemäß dem Stand der Technik ein Signalleitungspaar, welche meist als ein geschirmtes, verdrilltes Leitungspaar, in Form eines so genannten STP-Leitungspaar (shielded twisted pair) ausgeführt ist, eingespart werden. Außerdem kann bei Steckverbindungen, mittels welchen die Signalleitungen mit den Modulen verbunden werden, zwei Pins eingespart werden. Gegenüber dem Feldbussystem gemäß dem Stand der Technik führt das zu einer kostengünstigeren Verkabelung für die Signalübertragung. Ein weiterer Vorteil des erfindungsgemäßen Feldbussystems liegt darin, dass der Platzbedarf für die Verkabelung gegenüber dem Stand der Technik sowohl für die Leitungen selbst, als auch für die Steckverbindungen geringer ist. Damit ist es möglich, den zusätzlichen Bauraum für andere Leitungen zu nutzen oder vorhandene Leitungen oder Pins im Querschnitt zu vergrößern. Beispielsweise kann der zusätzliche Raum für größere Querschnitte von notwendigen Spannungsversorgungsleitungen genutzt werden.

Das Mastermodul kann beispielsweise als ein PC oder ein Prozessrechner ausgeführt sein. Die Untermodule können als Sensoren, beispielsweise Temperatur-, Druck- oder Drehzahlsensoren, oder Aktoren, beispielsweise Ventile, Stellmagnete, oder aus einer Kombination aus Aktor und Sensor ausgeführt sein. Die Untermodule werden also vom Mastermodul angesteuert und/oder liefern Messdaten an das Mastermodul.

Das erfindungsgemäße Feldbussystem kann Teil eines übergeordneten Feldbussystems oder Netzwerks sein. Die Kommunikation mit dem übergeordneten Systems wird dann vom Mastermodul abgewickelt.

In Ausgestaltung der Erfindung weisen alle Untermodule einen Speicher zur vollständigen Zwischenspeicherung eines Datenpakets auf. Die Untermodule sind so ausgeführt, dass es über eine entsprechende Konfiguration des Untermoduls einstellbar ist, ob ein Untermodul als das letzte Untermodul eingesetzt wird, also die Umschaltung der Datenrichtung vornimmt. Damit sind die Untermodule universell einsetzbar, so dass weniger Untermodulvarianten notwendig sind. Außerdem kann ein bestehendes Feldbussystem einfach erweitert werden.

In Ausgestaltung der Erfindung sind das Mastermodul und die Untermodule dazu vorgesehen, für das Senden und Empfangen der Datenpakete ein Ethernet-Protokoll, insbesondere ein so genanntes Industrial Ethernet-Protokoll zu verwenden. Unter einem Industrial Ethernet-Protokoll ist dabei eines der Protokolle zu verstehen, mittels welchen der Ethernet-Standard für die Vernetzung von Geräten, die in der industriellen Fertigung eingesetzt werden, nutzbar gemacht wird. Durch den Einsatz des Ethernet-Protokolls sind sehr hohe Übertragungsraten von beispielsweise 100 Mbit/s möglich, wodurch die Verlängerung der Laufzeit eines Datenpakets vom Mastermodul zum letzten Modul und wieder zurück, für die meisten Anwendungen des Feldbusses akzeptabel ist.

In Ausgestaltung der Erfindung ist das Mastermodul dazu vorgesehen, die Daten für und von allen Untermodulen in einem Datenpaket zusammen zu fassen. Die Daten werden also insbesondere im so genannten Summenrahmenverfahren innerhalb des Feldbussystems ausgetauscht. Das Datenpaket enthält darüber hinaus noch Verwaltungsdaten, wie beispielsweise einen so genannten Loopback, Steuerungsdaten und ein Prüfsummenfeld. Die Untermodule lesen im Falle von Aktoren aus dem Datenpaket nur jeweils die für sie bestimmten Informationen aus, beziehungsweise schreiben im Falle von Sensoren die Sensordaten nur in den für sie vorgesehenen Bereich des Datenpakets. Die jeweiligen Bereiche für die einzelnen Untermodule werden bei der Konfiguration des Feldbussystems festgelegt und in den einzelnen Untermodulen abgelegt. Damit ist der so genannte Overhead, also die notwendigen Verwaltungsdaten, sehr gering, so dass der Anteil der Nutzdaten von der Gesamtheit der übertragenen Daten sehr groß ist. Dies trägt ebenfalls zu einer kurzen Laufzeit eines Datenpakets bei.

In Ausgestaltung der Erfindung werden die Untermodule über die Verbindung, über die die Datenpakete ausgetauscht werden, auch mit Spannung versorgt. Das Feldbussystem ist damit als ein so genanntes hybrides Installationssystem ausgeführt. Damit ist der Aufwand für die Verkabelung des Feldbussystems minimal, da nur insgesamt zwei Leitungen plus eventuell eine Schirmung notwendig ist.

Es ist aber auch möglich, dass die Untermodule über separate Versorgungsleitungen mit Spannung versorgt werden.

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigt
- Fig. 1: ein Feldbussystem in einer schematisierten Darstel- lung,
- Fig. 2: ein universell einsetzbares Untermodul und
- Fig. 3: einen Aufbau eines Datenpakets.

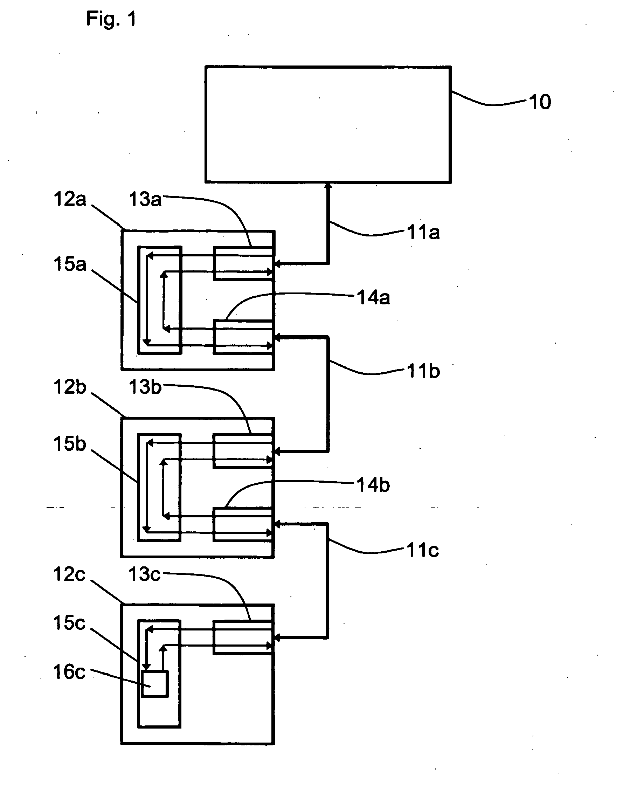

Gemäß Figur 1 weist ein Feldbussystem ein Mastermodul 10 auf, das als PC, z.B. als Industrie-PC ausgeführt sein kann. Das Mastermodul 10 ist mittels eines ersten Signalleitungspaars 11a mit einem ersten Untermodul 12a verbunden. Über ein zweites Signalleitungspaar 11b ist das erste Untermodul 12a mit einem zweiten Untermodul 12b verbunden. Dieses ist wiederum mit einem dritten Signalleitungspaar 11c mit einem dritten und letzten Untermodul 12c verbunden. Die Untermodule 12a, 12b und 12c bilden damit eine Untermodulkette, in der die Untermodule 12a, 12b und 12c seriell miteinander verbunden sind. Die Untermodulkette kann auch nur zwei oder mehr als drei Untermodule umfassen. Die Untermodule 12a, 12b und 12c sind dabei als Sensor- und/oder Aktormodule ausgeführt.

Die Signalleitungspaare 11a, 11b und 11c sind als geschirmte, verdrillte Leitungspaare ausgeführt, über welches die Untermodule 12a, 12b und 12c auch vom Mastermodul 10 mit Spannung versorgt werden. Alternativ dazu können die Untermodule 12a, 12b und 12c auch über separate Leitungen mit Spannung versorgt werden. Diese Leitungen sind dann insbesondere gemeinsam mit den Signalleitungspaaren geführt und werden mit derselben Steckverbindung an die Untermodule und das Mastermodul angeschlossen.

Die Untermodule 12a, 12b und 12c weisen zur Verbindung mit dem Mastermodul 10 bzw. dem vorgelagerten Untermodul 12a oder 12b jeweils eine erste z.B als Transformator-Transceiver-Einheit ausgebildete Transceiver-Einheit 13a, 13b und 13c auf. Zur Verbindung mit dem nachgelagerten Untermodul 12b, 12c weisen die Untermodule 12a und 12b jeweils eine zweite z.B. ebenfalls als Transformator-Transceiver-Einheit ausgebildete Transceiver-Einheit 14a, 14b auf. Da das letzte Untermodul 12c die Untermodulkette abschließt, ist für das letzte Untermodul 12c keine zweite Transceiver-Einheit notwendig, jedoch möglich.

Die Untermodule 12a, 12b und 12c weisen außerdem Steuerungseinheiten 15a, 15b, 15c auf, die mit den ersten und zweiten Transceiver-Einheiten 13a, 13b, 13c, 14a, 14b verbunden sind und Daten austauschen. Die Steuerungseinheiten 15a, 15b, 15c sind beispielsweise als eine anwendungsspezifische integrierte Schaltung (engl. application specific integrated circuit, ASIC) oder ein so genannter FPGA-Baustein (engl. Field Programmable Gate Array) ausgeführt. Die Steuerungseinheiten 15a, 15b, 15c sind so ausgeführt, dass der Betrieb der Untermodule 12a, 12b und 12c sichergestellt ist und der Datenaustausch zwischen dem Mastermodul 10 und den Untermodulen 12a, 12b und 12c realisiert werden kann.

Die Steuerungseinheit 15c des letzten Untermoduls 12c weist einen Speicher 16c auf, in dem empfangene Datenpakete zwischengespeichert werden können.

Für die weitere Beschreibung wird angenommen, dass es sich bei dem ersten und letzten Untermodul 12a und 12c jeweils um Aktoren und bei dem zweiten, mittleren Untermodul 12b um einen Sensor handelt. Die Aufteilung kann auch beliebig anders aussehen; es können auch nur Aktoren oder nur Sensoren vorgesehen sein. Die Annahme dient nur zur einfacheren Beschreibung der Datenübertragung innerhalb des Feldbussystems.

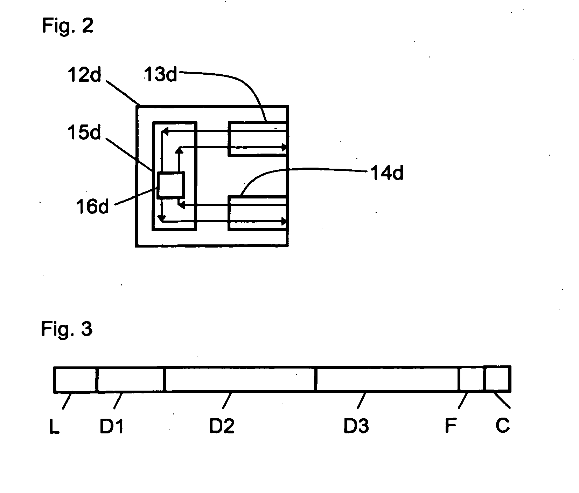

Zur Kommunikation mit einem Ethernet-Protokoll zwischen dem Mastermodul 10 und den Untermodulen 12a, 12b und 12c sendet das Mastermodul 10 ein Datenpaket über das erste Signalleitungspaar 11a an das erste Untermodul 12a. Das Datenpaket enthält neben Verwaltungsdaten Daten für alle drei Untermodule 12a, 12b und 12c. Der Aufbau eines Datenpakets ist in Fig. 3 dargestellt. Das Datenpaket beginnt mit einem Header, dem so genannten Loopback, der in einem Datenbereich L angeordnet ist. Daran schließen sich Datenbereiche D1, D2 und D3 an, wobei jeweils ein Datenbereich D1, D2 oder D3 für jeweils ein Untermodul 12a, 12b oder 12c vorgesehen ist. Das Datenpaket wird von Steuerungsdaten in einem Datenbereich F und einer darauf folgenden Prüfsumme in einem Datenbereich C abgeschlossen. Der Aufbau des Datenpakets wird in einer Konfigurationsphase vor der Inbetriebnahme des Feldbussystems festgelegt und im Mastermodul 10, sowie in den Steuerungseinheiten 15a, 15b, 15c der Untermodule 12a, 12b und 12c abgelegt. Im Betrieb des Feldbussystems greift dann jede Steuerungseinheit 15a, 15b, 15c nur auf den für sie bestimmten Datenbereich des Datenpakets zu.

Sofern ein Untermodul als ein Aktor ausgeführt ist, sind in dem Datenpaket Steuerinformationen, wie beispielsweise ein Öffnungsgrad für ein Pneumatikventil enthalten. Handelt es sich bei einem Untermodul um einen Sensor, so ist in dem Datenpaket Platz freigehalten, in den die jeweiligen Messdaten eingetragen werden können. Außerdem können auch Aktoren Daten, wie beispielsweise Statusinformationen an das Mastermodul 10 zurücksenden.

Das Datenpaket wird von der Transceiver-Einheit 13a des ersten Untermoduls 12a empfangen,und an die Steuerungseinheit 15a weitergegeben. Die Steuerungseinheit 15a liest die für sie bestimmten Daten aus dem Datenpaket aus und setzt die Anweisungen des Mastermoduls 10 um. Anschließend sendet die Steuerungseinheit 15a über die zweite Transceiver-Einheit 14a des ersten Untermoduls 12a das Datenpaket über das zweite Signalleitungspaar 11b an das zweite Untermodul 12b.

Das Datenpaket wird von der Transceiver-Einheit 13b des zweiten Untermoduls 12b empfangen und an die Steuerungseinheit 15b weitergegeben. Da es sich beim zweiten Untermodul um einen Sensor handelt, enthält das Datenpaket keine Steuerungsinformationen für das zweite Untermodul 12b. Je nach vorgenommener Konfiguration des Untermoduls 12b kann die Steuerungseinheit 15b des zweiten Untermoduls 12a bereits jetzt Messgrößen, wie beispielsweise einen gemessenen Druckwert, in den dafür vorgesehenen Bereich des Datenpakets eintragen, oder die Eintragung auf dem weiter unten beschriebenen Rückweg des Datenpakets zum Mastermodul 10 vornehmen. Die Steuerungseinheit 15b sendet dann über die zweite Transceiver-Einheit 14b des zweiten Untermoduls 12b das Datenpaket über das dritte Signalleitungspaar 11c an das dritte und letzte Untermodul 12c.

Das Datenpaket wird von der Transceiver-Einheit 13c des letzten Untermoduls 12c empfangen und an die Steuerungseinheit 15c weitergegeben. Die Steuerungseinheit 15c empfängt das gesamte Datenpaket und speichert es im Speicher 16c vollständig ab und führt damit eine Zwischenspeicherung des Datenpakets durch. Es liest außerdem auch die für sie bestimmten Daten aus dem Datenpaket aus und setzt die Anweisungen des Mastermoduls 10 um. Sobald die Zwischenspeicherung des Datenpakets abgeschlossen ist, sendet die Steuerungseinheit 15c über die erste Transceiver-Einheit 13c des letzten Untermoduls 12c das Datenpaket an die zweite Transceiver-Einheit 14b des zweiten Untermoduls 12b zurück. Die Datenrichtung im Feldbussystem wird also umgeschaltet und das Datenpaket auf den Rückweg zum Mastermodul 10 über dieselbe Reihenanordnung von Signalleitungspaaren 11c, 11b und 11a geschickt.

Sofern die Eintragung der Messdaten im zweiten Untermodul 12b noch nicht erfolgt ist, werden die Daten jetzt in das Datenpaket eingetragen und über die erste Transceiver-Einheit 13b des zweiten Untermoduls 12b und die zweite Transceiver-Einheit 14a des ersten Untermoduls 12a an das erste Untermodul 12a zurückgeschickt. Da das Datenpaket keine neuen Anweisungen des Mastermoduls 10 an das erste Untermodul 12a enthalten kann, wird das Datenpaket ohne weitere Verarbeitung. über die erste Transceiver-Einheit 13a an das Mastermodul 10 zurückgeschickt. Dieser gesamte Vorgang wiederholt sich laufend, so dass ein permanenter Datenaustausch zwischen dem Mastermodul 10 und den Untermodulen 12a, 12b und 12c gewährleistet ist.

Das Senden der Datenpakete findet insbesondere in einem festen Zeittakt von beispielsweise 10 kHz statt.

Die Untermodule können bezüglich der ersten und zweiten Transceiver-Einheiten, sowie dem Speicher zur Zwischenspeicherung des Datenpakets identisch aufgebaut sein. Ob ein Untermodul die Untermodulkette abschließt und damit die beschriebene Umkehr der Datenrichtung vornimmt, wird dann bei der Konfiguration des Feldbussystems festgelegt. Die Steuerungseinheiten der Untermodule sind so flexibel ausgelegt, dass diese Konfiguration vorgenommen werden kann.

Ein derartig aufgebautes Untermodul ist in Fig. 2 dargestellt. Es weist wie das erste und zweite Untermodul aus
Fig.1 eine erste Transceiver-Einheit 13d, eine zweite Transceiver-Einheit 14d und eine Steuerungseinheit 15d auf. Darüber hinaus verfügt es ebenso wie das dritte Untermodul aus Fig.1 über einen Speicher 16d, in dem ein Datenpaket vollständig zwischen gespeichert werden kann.

## Patentansprüche

1. Feldbussystem mit einem Mastermodul (10) und wenigstens zwei Untermodulen (12a, 12b, 12c), wobei
- die Untermodule (12a, 12b, 12c) seriell miteinander verbunden sind,
- ein erstes Untermodul (12a) und ein letztes Untermodul (12c) jeweils nur mit einem weiteren Untermodul (12b) verbunden sind,
- das Mastermodul (10) nur mit dem ersten Untermodul (12a) verbunden ist und
- das Mastermodul (10) und die Untermodule (12a, 12b, 12c) dazu vorgesehen sind, dass das Mastermodul (10) Datenpakete an das erste Untermodul (12a) sendet und von ihm empfängt, welche zwischen den Untermodulen (12a, 12b, 12c) weitergegeben werden,
**dadurch gekennzeichnet, dass** das Mastermodul (10) und die Untermodule (12a, 12b, 12c) für das Senden und Empfangen der Datenpakete jeweils mit einem Signalleitungspaar (11a, 11b, 11c) verbunden sind und das letzte untermodul (12c) einen Speicher (16c) aufweist und dazu vorgesehen ist, ein vom Mastermodul (10) gesendetes Datenpaket zu empfangen, vollständig im Speicher (16c) zwischenzuspeichern und anschließend über die jeweiligen Signalleitungspaare (11a, 11b, 11c) der anderen Untermodule (12a, 12b) an das Mastermodul (10) zurückzusenden.

2. Feldbussystem nach Anspruch 1, **dadurch gekennzeichnet, dass** das Mastermodul (10) und die Untermodule (12a, 12b, 12c) dazu vorgesehen sind, für das Senden und Empfangen im Halb-Duplexverfahren durchzuführen.

3. Feldbussystem nach Anspruch 1 oder 2, **dadurch gekennzeichnet, dass** alle Untermodule (12c) einen Speicher zur vollständigen Zwischenspeicherung eines Datenpakets aufweisen und alle Untermodulen (12c) so ausgeführt sind, dass es einstellbar ist, ob ein Untermodul als das letzte Untermodul (12c) eingesetzt wird.

4. Feldbussystem nach Anspruch 1, 2 oder 3, **dadurch gekennzeichnet, dass** das Mastermodul (10) und die Untermodule (12a, 12b, 12c) dazu vorgesehen sind, für das Senden und Empfangen der Datenpakete ein Ethernet-Protokoll zu verwenden.

5. Feldbussystem nach einem der Ansprüche 1 bis 4, **dadurch gekennzeichnet, dass** das Mastermodul (10) dazu vorgesehen ist, die Daten für und von allen Untermodulen (12a, 12b, 12c) in einem Datenpaket zusammen zu fassen.

6. Feldbussystem nach Anspruch 5, **dadurch gekennzeichnet, dass** das Mastermodul (10) und die Untermodule (12a, 12b, 12c) dazu vorgesehen sind, für das Senden und Empfangen der Datenpakete ein Summenrahmenverfahren zu verwenden.

7. Feldbussystem nach einem der Ansprüche 1 bis 6, **dadurch gekennzeichnet, dass** die Untermodule (12a, 12b, 12c) dazu vorgesehen sind, die Datenpakete zu verändern.

8. Feldbussystem nach einem der Ansprüche 1 bis 7, **dadurch gekennzeichnet, dass** über das Signalleitungspaar (11a, 11b, 11c), über das die Datenpakete ausgetauscht werden, die Untermodule (12a, 12b, 12c) mit Spannung versorgt werden.

9. Verfahren zum Datenaustausch in einem Feldbussystem mit einem Mastermodul (10) und wenigstens zwei Untermodule (12a, 12b, 12c), wobei die Untermodule (12a, 12b, 12c) seriell miteinander verbunden sind, ein erstes Untermodul (12a) und ein letztes Untermodul (12c) jeweils nur mit einem weiteren Untermodul (12b) verbunden sind, das Mastermodul (10) nur mit dem ersten Untermodule (12a) verbunden ist und das Mastermodul (10) Datenpakete an das erste Untermodul (12a) sendet und von ihm empfängt, welche zwischen den Untermodulen (12a, 12b, 12c) weitergegeben werden, **dadurch gekennzeichnet, dass** das Mastermodul (10) und die Untermodule (12a, 12b, 12c) für das Senden und Empfangen der Datenpakete jeweils mit einem Signalleitungspaar (11a, 11b, 11c) verbunden sind und das letzte Untermodul (12c) einen Speicher (16c) aufweist und ein vom Mastermodul (10) gesendetes Datenpaket empfängt, vollständig im Speicher (16c) zwischenspeichert und anschließend über die jeweiligen Signalleitungspaare (11a, 11b, 11c) der anderen Untermodule (12a, 12b) an das Mastermodul (10) zurücksendet.

## Claims

1. Field bus system with a master module (10) and at least two sub-modules (12a, 12b, 12c), wherein
- the sub-modules (12a, 12b, 12c) are serially connected to one another,
- a first sub-module (12a) and a last sub-module (12c) are each connected to one further sub-module (12b)
- the master module (10) is connected only to the first sub-module (12a) and
- the master module (10) and the sub-modules (12a, 12b, 12c) are provided for the master module (10) to send to and receive from the first sub-module (12a) data packets which are passed on between the sub-modules (12a, 12b, 12c),
**characterised in that** the master module (10) and the sub-modules (12a, 12b, 12c) are each connected by a signal line pair (11a, 11b, 11c) for the sending and receiving of the data packets, and the last sub-module (12c) has a memory (16c) and is provided for the purpose of receiving a data packet sent by the master module (10), buffering it completely in the memory (16c), and then sending it back to the master module (10) via the respective signal line pairs (11a, 11b, 11c) of the other sub-modules (12a, 12b).

2. Field bus system according to claim 1, **characterised in that** the master module (10) and the sub-modules (12a, 12b, 12c) are provided for sending and receiving in half-duplex operation.

3. Field bus system according to claim 1 or 2, **characterised in that** all sub-modules (12c) have a memory for the full buffering of a data packet, and all sub-modules (12c) are so designed that it is possible to adjust whether a sub-module is used as the last sub-module (12c).

4. Field bus system according to claim 1, 2 or 3, **characterised in that** the master module (10) and the sub-modules (12a, 12b, 12c) are provided for sending and receiving the data packets using an ethernet protocol.

5. Field bus system according to any of claims 1 to 4, **characterised in that** the master module (10) is provided for assembling the data for and from all sub-modules (12a, 12b, 12c) into a data packet.

6. Field bus system according to claim 5, **characterised in that** the master module (10) and the sub-modules (12a, 12b, 12c) are provided for sending and receiving the data packets using a summing frame method.

7. Field bus system according to any of claims 1 to 6, **characterised in that** the sub-modules (12a, 12b, 12c) are connected for the purpose of modifying data packets.

8. Field bus system according to any of claims 1 to 7, **characterised in that** the sub-modules (12a, 12b, 12c) are supplied with voltage over the signal line pair (11a, 11b, 11c) used for the exchange of data packets.

9. Method for data exchange in a field bus system with a master module (10) and at least two sub-modules (12a, 12b, 12c), wherein the sub-modules (12a, 12b, 12c) are serially connected to one another, a first sub-module (12a) and a last sub-module (12c) are each connected to one further sub-module (12b), the master module (10) is connected only to the first sub-module (12a), and the master module (10) sends to and receives from the first sub-module (12a) data packets which are passed on between the sub-modules (12a, 12b, 12c), **characterised in that** the master module (10) and the sub-modules (12a, 12b, 12c) are each connected by a signal line pair (11a, 11b, 11c) for the sending and receiving of the data packets, and the last sub-module (12c) has a memory (16c), and receives a data packet sent by the master module (10), buffers it completely in the memory (16c), and then sends it back to the master module (10) via the respective signal line pairs (11a, 11b, 11c) of the other sub-modules (12a, 12b).

## Revendications

1. Système de bus de terrain avec un module maître (10) et au moins deux sous-modules (12a, 12b, 12c), sachant
- que les sous-modules (12a, 12b, 12c) sont reliés entre eux en liaison série,
- qu'un premier sous-module (12a) et un dernier sous-module (12c) ne sont chacun reliés qu'avec un autre sous-module (12b),
- que le module maître (10) est uniquement relié au premier sous-module (12a) et
- que le module maître (10) et les sous-modules (12a, 12b, 12c) sont conçus pour que le module maître (10) envoie au premier sous-module (12a), et reçoive de celui-ci, des paquets de données qui sont retransmis entre les sous-modules (12a, 12b, 12c),
**caractérisé en ce que** le module maître (10) et les sous-modules (12a, 12b, 12c) sont, pour l'émission et la réception des paquets de données, respectivement reliés à une paire de lignes de signaux (11a, 11b, 11c), et le dernier sous-module (12c) présente une mémoire (16c) et est prévu pour recevoir un paquet de données envoyé par le module maître (10), le stocker temporairement en totalité dans la mémoire (16c) puis le renvoyer au module maître (10) par l'intermédiaire des paires de lignes de signaux respectives (11a, 11b, 11c) des autres sous-modules (12a, 12b).

2. Système de bus de terrain selon la revendication 1, **caractérisé en ce que** le module maître (10) et les sous-modules (12a, 12b, 12c) sont conçus pour effectuer l'émission et la réception en procédé semi-duplex.

3. Système de bus de terrain selon la revendication 1 ou 2, **caractérisé en ce que** tous les sous-modules (12c) présentent une mémoire pour le stockage temporaire intégral d'un paquet de données, et tous les sous-modules (12c) sont conçus de telle sorte qu'on peut régler si l'on utilise ou non un sous-module comme dernier sous-module (12c).

4. Système de bus de terrain selon la revendication 1, 2 ou 3, **caractérisé en ce que** le module maître (10) et les sous-modules (12a, 12b, 12c) sont conçus pour utiliser un protocole Ethernet pour l'émission et la réception des paquets de données.

5. Système de bus de terrain selon l'une des revendications 1 à 4, **caractérisé en ce que** le module maître (10) est prévu pour regrouper en un paquet de données les données destinées à et provenant de tous les sous-modules (12a, 12b, 12c).

6. Système de bus de terrain selon la revendication 5, **caractérisé en ce que** le module maître (10) et les sous-modules (12a, 12b, 12c) sont conçus pour utiliser un procédé à trame totale pour l'émission et la réception des paquets de données.

7. Système de bus de terrain selon l'une des revendications 1 à 6, **caractérisé en ce que** les sous-modules (12a, 12b, 12c) sont conçus pour modifier les paquets de données.

8. Système de bus de terrain selon l'une des revendications 1 à 7, **caractérisé en ce que** les sous-modules (12a, 12b, 12c) sont alimentés en tension par l'intermédiaire de la paire de lignes de signaux (11a, 11b, 11c) par l'intermédiaire de laquelle sont échangés les paquets de données.

9. Procédé d'échange de données dans un système de bus de terrain avec un module maître (10) et au moins deux sous-modules (12a, 12b, 12c), sachant que les sous-modules (12a, 12b, 12c) sont reliés entre eux en liaison série, qu'un premier sous-module (12a) et un dernier sous-module (12c) ne sont chacun reliés qu'avec un autre sous-module (12b), que le module maître (10) est uniquement relié au premier sous-module (12a) et que le module maître (10) envoie au premier sous-module (12a), et reçoit de celui-ci, des paquets de données qui sont retransmis entre les sous-modules (12a, 12b, 12c), **caractérisé en ce que** le module maître (10) et les sous-modules (12a, 12b, 12c) sont, pour l'émission et la réception des paquets de données, respectivement reliés à une paire de lignes de signaux (11a, 11b, 11c), et le dernier sous-module (12c) présente une mémoire (16c) et reçoit un paquet de données envoyé par le module maître (10), le stocke temporairement en totalité dans la mémoire (16c) puis le renvoie au module maître (10) par l'intermédiaire des paires de lignes de signaux respectives (11a, 11b, 11c) des autres sous-modules (12a, 12b).
